# EUROPÄISCHE PATENTSCHRIFT

(11) **EP 3 099 555 B1**
(45) Veröffentlichungstag und Bekanntmachung des Hinweises auf die Patenterteilung: **25.04.2018**
(21) Anmeldenummer: 15706672.1
(22) Anmeldetag: 30.01.2015
(51) Int. Cl.: B62D 1/20, F16D 3/06, F16C 3/035

(54) **LENKWELLE FÜR EIN KRAFTFAHRZEUG**
STEERING SHAFT FOR A MOTOR VEHICLE
ARBRE DE DIRECTION POUR VÉHICULE AUTOMOBILE

(30) Priorität: 31.01.2014 DE 102014101194
(43) Veröffentlichungstag der Anmeldung: 07.12.2016
(73) Patentinhaber: ThyssenKrupp Presta AG, 9492 Eschen (LI); thyssenkrupp AG, 45143 Essen (DE)
(72) Erfinder: KIRMSSE, Helmut, FL-9494 Schaan (LI); KLUKOWSKI, Christoph, FL-9487 Gamprin (LI)
(74) Vertreter: thyssenkrupp Intellectual Property GmbH
(86) Internationale Anmeldenummer: PCT/EP2015/000181
(87) Internationale Veröffentlichungsnummer: WO 2015/113770

(56) Entgegenhaltungen:
- EP-A1- 1 772 346
- KR-A- 20100 090 017
- US-A1- 2008 254 902

## Beschreibung

### Technisches Gebiet

Die vorliegende Erfindung betrifft eine Lenkwelle für ein Kraftfahrzeug, welche eine innere Spindel und eine zu dieser teleskopierbare äußere Spindel aufweist.

### Stand der Technik

Teleskopierbare Lenkwellen für Kraftfahrzeuge sind bekannt, bei welchen eine innere Spindel und eine dazu komplementäre, koaxial zur inneren Spindel angeordnete äußere Spindel vorgesehen sind, welche relativ zueinander teleskopierbar sind. Auf diese Weise lässt sich bei Kraftfahrzeugen eine positionsverstellbare Lenksäule darstellen, mittels welcher die Lenkradposition zumindest in Axialrichtung der Lenkwelle an die jeweilige Fahrerposition angepasst werden kann, um entsprechend die Ergonomie für den Fahrer des Kraftfahrzeugs und damit die Sicherheit zu verbessern. Teleskopierbare Lenkwellen sind weiterhin für Sicherheitslenksäulen bekannt, bei welchen sich die Lenkwelle im Crash-Falle verkürzt beziehungsweise zurückweicht, beispielsweise dadurch, dass der Fahrer auf dem Lenkrad auftrifft und das Lenkrad dann zusammen mit der Lenkwelle zurückschiebt.

Teleskopierbare Lenkwellen werden in Kraftfahrzeugen zwischen dem Lenkgetriebe und der Lenksäule eingesetzt und sollen neben der Positionsseinstellung und Crashsicherheit auch geringfügige Änderungen des Abstandes zwischen dem Lenkgetriebe und der Lenksäule kompensieren, die beispielsweise aufgrund dynamischer Belastungen im Fahrbetrieb durch die entsprechenden Verwindungen des Chassis auftreten, aber auch durch Bewegungen des Lenkgetriebes in einer Gummilagerung. Auch diese geringfügigen Änderungen des Abstands sollen möglichst geräuscharm und für den Fahrer nicht spürbar durch die teleskopierbare Lenkwelle kompensiert werden.

Die Lenkwelle mit dem Teleskopmechanismus soll neben einer leichtgängigen und ruckfreien Axialverstellung auch eine möglichst symmetrische Übertragung des Lenkdrehmoments zwischen der inneren Spindel und der äußeren Spindel bereitstellen, so dass der Fahrer zum einen keinen Unterschied feststellen kann, zwischen einem Lenkausschlag in die eine Richtung und einem Lenkausschlag in die andere Richtung, und zum anderen ein mögliches Spiel bei der Übertragung des Drehmomentes zwischen der inneren Spindel und der äußeren Spindel durch den Fahrer nicht wahrgenommen wird.

Um beim Teleskopieren der Lenkwelle zum Verstellen der Lenkradposition ein möglichst gutes Verschiebegefühl für den Fahrer bereitzustellen, ist es gewünscht, insbesondere einen Stick-Slip-Effekt zu verringern beziehungsweise weitgehend zu vermeiden, um ein flüssiges und geräuscharmes Verstellen der Position des Lenkrades zu ermöglichen. Hierzu sind aus dem Stand der Technik Gleithülsen bekannt, welche zwischen der inneren Spindel und der äußeren Spindel angeordnet werden, und welche dazu dienen, die Reibung zwischen der inneren Spindel und der äußeren Spindel beim Teleskopieren zu verringern. Eine solche Gleithülse ist beispielsweise aus der WO2010/037509 A1 bekannt, welche eine Gleithülse mit dauerhaft verbesserten Gleiteigenschaften darstellt. Aus der WO2010/037509 A1 ist auch bekannt, die innere Spindel und die äußere Spindel sowie die Gleithülse unrund auszuführen, so dass entsprechend bei der Drehmomentübertragung über einen in Übertragungsrichtung des Drehmoments gelagerten Formschluss die Drehmomentübertragung möglichst spielfrei erreicht werden kann.

Auch aus der WO01/89909 A1 ist ein Teleskopmechanismus für Kraftfahrzeuglenksäulen bekannt, bei welchem sowohl eine innere Spindel wie auch eine äußere Spindel vorgesehen sind, welche jeweils an mindestens einer Seite eine Abflachung aufweisen und zueinander komplementär so ausgebildet sind, dass die Übertragung des Drehmomentes wiederum entsprechend über einen Formschluss erreicht werden kann.

Aus der US 2009/0124399 A1 ist eine Universalverbindung bekannt, bei welcher eine Welle in einer Hülse teleskopierbar aufgenommen ist und die Drehmomentübertragung über eine zwischen der Welle und der Hülse angeordnete Buchse erreicht wird, welche walzenförmige Vorsprünge aufweist, die einen Formschluss zwischen entsprechenden Ausnehmungen in der Welle sowie der Hülse zur Drehmomentübertragung ermöglicht.

Auch aus der US 2008/0254902 A1 ist eine Universalverbindung bekannt, in welcher eine in einer Hülse geführte Welle über eine dazwischen gelagerte Buchse zur Drehmomentübertragung gekoppelt ist, wobei die Buchse walzenförmige C-Profilabschnitte aufweist, und Aussparungen zur Aufnahme von Führungskugeln zur Übertragung des Drehmoments aufweist.

Die EP 1 772 346 als nächstliegender Stand der Technik offenbart eine Lenkwelle für ein Kraftfahrzeug, umfassend eine innere Spindel, eine relativ zu dieser teleskopierbare äußere Spindel und eine zwischen der inneren Spindel und der äußeren Spindel angeordnete Gleithülse, wobei die Gleithülse mindestens eine Ausnehmung zum Aufnehmen mindestens eines mit der inneren Spindel und der äußeren Spindel eingreifenden Wälzkörpers zur Drehmomentübertragung aufweist und die Gleithülse mindestens eine Aufnahme zum Aufnehmen mindestens einer zwischen der inneren Spindel und der äußeren Spindel angeordneten elastischen Walze zur Drehmomentübertragung aufweist. Die Walzen haben einen geraden, in axialer Längsrichtung durchgehenden Schlitz.

### Darstellung der Erfindung

Ausgehend von dem bekannten Stand der Technik ist es eine Aufgabe der vorliegenden Erfindung, eine Lenkwelle sowie eine Gleithülse anzugeben, welche das Verhalten der Lenkwelle bezüglich der Spielfreiheit beim Übertragen eines Drehmomentes sowie bezüglich der Verringerung des Stick-Slip-Effektes weiter verbessern.

Diese Aufgabe wird durch eine Lenkwelle für ein Kraftfahrzeug mit den Merkmalen des Anspruchs 1 gelöst. Vorteilhafte Weiterbildungen ergeben sich aus den Unteransprüchen.

Entsprechend wird eine Lenkwelle für ein Kraftfahrzeug vorgeschlagen, umfassend eine innere Spindel, eine relativ zu dieser teleskopierbare äußere Spindel und eine zwischen der inneren Spindel und der äußeren Spindel angeordnete Gleithülse, wobei die Gleithülse mindestens eine Ausnehmung zum Aufnehmen mindestens eines mit der inneren Spindel und der äußeren Spindel eingreifenden Wälzkörpers zur Drehmomentübertragung aufweist, wobei die Gleithülse mindestens eine Aufnahme zum Aufnehmen mindestens einer zwischen der inneren Spindel und der äußeren Spindel angeordneten elastischen Walze zur Drehmomentübertragung aufweist. Erfindungsgemäß ist in der Aufnahme mindestens eine elastische Walze aus einem elastischen Kunststoff aufgenommen, wobei die elastische Walze einen sich in Walzenrichtung erstreckenden Schlitz aufweist, der schraubenförmig im Sinne eines Viertelschraubenganges ausgestaltet ist, und die elastische Walze einen C-förmigen Querschnitt aufweist.

Durch das Bereitstellen mindestens einer Aufnahme zum Aufnehmen einer elastischen Walze kann eine Drehmomentübertragung zwischen der inneren Spindel und der äußeren Spindel bei kleineren Drehmomenten über diese elastische Walze erreicht werden. Damit kann eine Spielfreiheit bei der Übertragung kleiner Drehmomente erreicht werden, welche entsprechend das Lenkgefühl für den Fahrer des Kraftfahrzeuges weiter verbessert. Der Fahrer spürt entsprechend keinerlei Spiel in der Lenkwelle, sondern das Drehmoment wird sofort zwischen der inneren und der äußeren Spindel übertragen. Wenn ein bestimmtes Drehmoment überschritten wird, welches mit der Vorspannkraft der elastischen Walzen korreliert, wird die elastische Walze komprimiert und die Drehmomentübertragung bei höheren Drehmomenten findet dann über den Wälzkörper, bevorzugt über eine steife Stahlkugel, statt, welche bei den infrage kommenden Drehmomenten im Wesentlichen keinen elastischen Effekt zeigt.

Entsprechend kann eine Drehmomentübertragung bei allen von einem Fahrer auf die Lenkwelle aufgebrachten Drehmomenten bereit gestellt werden, die vom Fahrer als spielfrei empfunden wird, da bereits bei kleinsten Drehmomenten über die elastischen Walzen eine Kopplung zwischen der inneren Spindel und der äußeren Spindel und damit eine Drehmomentübertragung stattfindet.

In gleicher Weise können die Wälzkörper, insbesondere die steifen Stahlkugeln, mit einem minimalen Spiel zwischen der inneren Spindel und der äußeren Spindel aufgenommen sein, so dass beispielsweise beim Teleskopieren der inneren Spindel relativ zu der äußeren Spindel die jeweiligen Wälzkörper nicht in Kontakt mit beiden Spindeln stehen. Über eine entsprechende Dimensionierung der elastischen Walzen und eine geeignete Materialauswahl kann auf diese Weise auch der Stick-Slip-Effekt verringert werden, da beim Teleskopieren der inneren Spindel relativ zu der äußeren Spindel ein Kontakt zwischen der inneren Spindel und der äußeren Spindel lediglich über die elastischen Walzen bereitgestellt wird.

Mit Vorteil kann die mindestens eine Stahlkugel in der mindestens einen Ausnehmung in der Gleithülse derart aufgenommen sein, dass die Stahlkugel in einer Rotationsrichtung vorgespannt gegenüber der äußeren und der inneren Spindel angeordnet ist. Bevorzugt sind mehrere Stahlkugeln vorgesehen, wobei bevorzugt alle Stahlkugeln in gleicher Rotationsrichtung vorgespannt angeordnet sind. Hierzu können die Ausnehmungen für die Stahlkugeln und die mindestens eine Aufnahme für die elastische Walze entsprechend dimensioniert und auf die Form der inneren und äußeren Spindel entsprechend angepasst werden.

Weiterhin kann das Material der elastischen Walzen so optimiert werden, dass es die erforderlichen Eigenschaften bezüglich der Elastizität aufweist und gleichzeitig die Reibungseigenschaften optimiert. Diese Optimierung ist unabhängig von dem Material der Gleithülse, welche andere Anforderungen an die Materialwahl stellt, nämlich eine möglichst hohe Steifheit bei gleichzeitiger geringer Reibung, um ein ruckfreies und geräuscharmes Verschieben der inneren Spindel gegenüber der äußeren Spindel zu ermöglichen und die beiden Spindeln sicher und maßhaltig gegeneinander zu führen, so dass auch ein mögliches Verkanten der beiden Spindeln gegeneinander vermieden wird.

Bevorzugt ist die Aufnahme eine Aussparung, welche die mindestens eine elastische Walze so aufnimmt, dass sie mit der inneren Spindel und der äußeren Spindel direkt in Kontakt steht. Auf diese Weise kann eine direkte Kraftübertragung bei der Übertragung eines Drehmoments zwischen der inneren Spindel und der äußeren Spindel erreicht werden, ohne Zwischenschaltung der Gleithülse.

In einer Alternative ist die Aufnahme eine Vertiefung in der Gleithülse, welche die mindestens eine elastische Walze so aufnimmt, dass sie zwischen der Gleithülse und der inneren Spindel oder zwischen der Gleithülse und der äußeren Spindel angeordnet ist. Auf diese Weise lässt sich die Gleithülse einfach mit der mindestens einen elastischen Welle bestücken und kann so als fertig montierbares Element bereitgestellt werden.

In der Ausnehmung der Gleithülse ist bevorzugt mindestens ein steifer Wälzkörper, besonders bevorzugt mindestens eine steife Stahlkugel, angeordnet, welcher mit der inneren Spindel und der äußeren Spindel zur Drehmomentübertragung in Kontakt steht, wobei der Wälzkörper bevorzugt steifer ist, als die elastische Welle. Besonders bevorzugt ist der steife Wälzkörper unter Spiel, bevorzugt unter Ausbildung eines Luftspalts, zwischen der inneren Spindel und der äußeren Spindel angeordnet. Auf diese Weise kann erreicht werden, dass bei kleinen zu übertragenden Drehmomenten die Drehmomentübertragung allein über die elastischen Walzen erreicht wird und bei größeren Drehmomenten nach einer Kompression der elastischen Walzen eine Übertragung auch mittels der steiferen Wälzkörper stattfindet. So kann bei allen zu übertragenden Drehmomenten eine für den Fahrer als spielfrei empfundene Übertragung der Drehmomente erreicht werden.

In einer Weiterbildung ist in der Aufnahme mindestens eine elastische Walze aufgenommen, welche im entspannten Zustand einen größeren Durchmesser aufweist, als ein steifer Wälzkörper. Die elastische Walze ist besonders bevorzugt unter Vorspannung zwischen der inneren Spindel und der äußeren Spindel angeordnet. Durch die Vorspannung wird sichergestellt, dass die Übertragung der Drehmomente vom Fahrer stets als spielfrei empfunden wird, da jedem eingetragenen Drehmoment ein Widerstand entgegengesetzt wird.

Um eine sichere und verkantungsfreie Führung der inneren Spindel an der äußeren Spindel zu erreichen, ist die Gleithülse bevorzugt aus einem Material ausgebildet, welches steifer ist, als das Material der elastischen Walze und die Gleithülse bevorzugt aus einem steifen Kunststoffmaterial ausgebildet ist.

Ein richtungsunabhängig ausgewogenes Verhalten kann dadurch erreicht werden, dass entlang des Umfangs der Gleithülse mindestens zwei Aufnahmen zum Aufnehmen elastischer Walzen und mindestens zwei Ausnehmungen zum Aufnehmen steifer Wälzkörper vorgesehen sind, wobei Ausnehmungen und Aufnahmen in Umfangsrichtung abwechselnd vorgesehen sind.

Die oben genannte Aufgabe wird weiterhin durch eine Gleithülse mit den Merkmalen des Anspruchs 9 gelöst.

Entsprechend wird eine Gleithülse zur Anordnung zwischen einer inneren Spindel und einer relativ zu dieser teleskopierbaren äußeren Spindel einer Lenkwelle eines Kraftfahrzeugs vorgeschlagen, wobei die Gleithülse mindestens eine Ausnehmung zum Aufnehmen mindestens eines mit der inneren Spindel und der äußeren Spindel eingreifenden Wälzkörpers zur Drehmomentübertragung aufweist. Erfindungsgemäß weist die Gleithülse mindestens eine Aufnahme zum Aufnehmen mindestens einer zwischen der inneren Spindel und der äußeren Spindel angeordneten elastischen Walze zur Drehmomentübertragung auf. Erfindungsgemäß ist in der Aufnahme mindestens eine elastische Walze aus einem elastischen Kunststoff aufgenommen, wobei die elastische Walze einen sich in Walzenrichtung erstreckenden Schlitz aufweist, der schraubenförmig im Sinne eines Viertelschraubenganges ausgestaltet ist, und die elastische Walze einen C-förmigen Querschnitt aufweist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Draufsicht auf eine Lenkwelle für ein Kraftfahrzeug in einem ersten Ausführungsbeispiel;
- Figur 2: eine schematische perspektivische Ansicht einer inneren Spindel mit einer Gleithülse in einem ersten Ausführungsbeispiel;
- Figur 3: eine schematische Schnittdarstellung durch die innere Spindel mit der Gleithülse aus Figur 2 in Kombination mit einer äußeren Spindel;
- Figur 4: eine schematische Schnittdarstellung einer inneren Spindel, einer äußeren Spindel sowie einer dazwischen angeordneten Gleithülse in einem weiteren Ausführungsbeispiel;
- Figuren 5-7: schematische Ansichten, einschließlich einer schematische Draufsicht, auf eine nicht erfindungsgemäße elastische Walze;
- Figur 8: eine schematische perspektivische Darstellung der elastischen Walze aus den Figuren 5-7;
- Figuren 9-11: schematische Ansichten, einschließlich einer schematische Draufsicht, auf eine elastische Walze in einem weiteren erfindungsgemäßen Ausführungsbeispiel;
- Figur 12: eine schematische perspektivische Ansicht der in den Figuren 9-11 gezeigten elastischen Walze.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

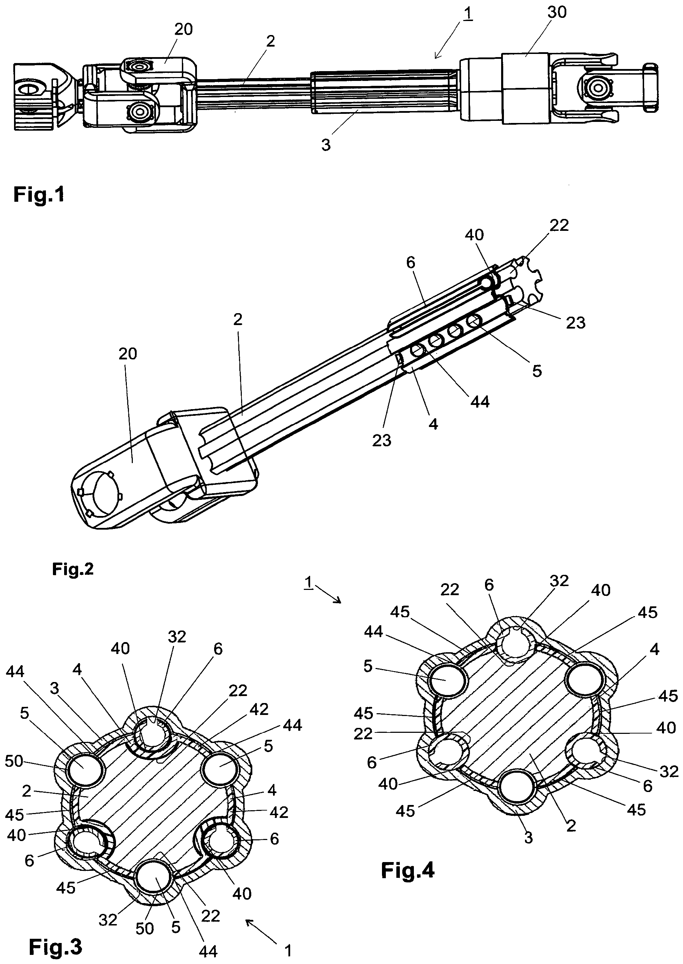

Figur 1 zeigt eine schematische perspektivische Draufsicht auf eine Lenkwelle 1 für ein Kraftfahrzeug. Eine innere Spindel 2 ist vorgesehen, welche ein Anschlussstück 20 aufweist, das zum Anschluss eines Kardangelenkes, beispielsweise zur Verbindung mit einem nicht gezeigten Lenkgetriebe, ausgebildet ist.

Eine äußere Spindel 3 ist vorgesehen, welche ebenfalls ein Anschlussstück 30 zum Anschluss an ein Kardangelenk aufweist, an welches beispielsweise eine Lenksäule anschließbar ist.

Die innere Spindel 2 ist koaxial zur äußeren Spindel 3 angeordnet und ist relativ zu der äußeren Spindel 3 teleskopierbar. Diese Teleskopierbarkeit wird in dem gezeigten Ausführungsbeispiel dadurch bereitgestellt, dass die innere Spindel 2 in die äußere Spindel 3 hineingleiten kann beziehungsweise wieder aus dieser herausgezogen werden kann.

Wie sich beispielsweise aus der schematischen perspektivischen Darstellung in Figur 2 ergibt, weist die innere Spindel 2 rinnenförmige Ausnehmungen 22 auf, welche sich entlang der Spindelachse erstrecken. Im Querschnitt sind die Ausnehmungen 22 im Wesentlichen kreisabschnittsförmig, hier halbkreisförmig, ausgebildet.

Eine Gleithülse 4 ist vorgesehen, welche zwischen der inneren Spindel 2 und der äußeren Spindel 3 angeordnet ist. In dem in Figur 1 gezeigten zusammengebauten Zustand der Lenkwelle 1 ist die Gleithülse 4 entsprechend nicht zu erkennen, da sie innerhalb der äußeren Spindel 3 aufgenommen ist und die äußere Spindel 3 mit der inneren Spindel 2 über die Gleithülse 4 in Verbindung steht.

Die innere Spindel 2 hat, wie beispielsweise in Figur 2 zu erkennen, im Prinzip einen kreisförmigen Querschnitt, in welchem die rillenförmigen Ausnehmungen 22, welche als im Querschnitt im Wesentlichen halbkreisförmige Rillen ausgebildet sind, eingebracht sind.

Die Gleithülse 4 ist in dem in den Figuren 2 und 3 gezeigten Ausführungsbeispiel so ausgebildet, dass sie Aufnahmen 40 aufweist, welche im Wesentlichen den Konturen der rillenförmigen Ausnehmung 22 der inneren Spindel 2 folgen. Dies ist besonders gut in der Querschnittansicht in Figur 3 zu erkennen. Die Aufnahmen 40 der Gleithülse 4 sind entsprechend so geformt, dass sie in den rillenförmigen Ausnehmungen 22 der inneren Spindel 2 aufgenommen werden und im Wesentlichen über die ganze Fläche der Gleithülse 4 hinweg an der inneren Spindel 2 anliegen.

Zusätzlich können Fixierelemente 23 vorgesehen sein, die die Gleithülse 4 in einer axialen Position auf der inneren Spindel 2 festlegen. Derartige Fixierelemente können im einfachsten Fall durch eine Verstemmung, einen Einpress- oder einen Quetschvorgang, der zu entsprechenden Materialaufwerfungen führt, bewirkt werden.

Die Gleithülse 4 ist damit so ausgebildet, dass sie den Außenkonturen der inneren Spindel 2 vollständig folgt. In Figur 3 ist dies besonders gut zu erkennen, gemäß welcher nicht nur in den Bereichen der Aufnahmen 40, sondern auch in den dazwischen angeordneten Brückenbereichen 42 ein im Wesentlichen vollflächiges Anliegen der Gleithülse 4 an den äußeren Konturen der inneren Spindel 2 stattfindet. Dieses vollflächige Anliegen ist allerdings nicht zwingend. Insbesondere ist es zu bevorzugen, wenn zwischen der Gleithülse 4 und der äußeren Spindel 3 ein Spalt 45 vorgesehen ist.

Ausnehmungen 44 sind ebenfalls in der Gleithülse 4 vorgesehen, welche die Aufnahme von Wälzkörpern 5 ermöglichen, die in dem gezeigten Ausführungsbeispiel als steife Stahlkugeln vorgesehen sind. Die Wälzkörper 5 sind dabei so dimensioniert, dass sie mit einem geringen Spiel, also unter Ausbildung eines marginalen Luftspaltes 50, in den Ausnehmungen 22 und den Ausnehmungen 44 der Gleithülse 4 angeordnet sind, so dass eine reibungsarme Rotation der Wälzkörper 5 ermöglicht wird.

In der äußeren Spindel 3 sind ebenfalls Aufnahmen 32 vorgesehen, welche so dimensioniert sind, dass sie die Wälzkörper 5 im Wesentlichen unter Ausbildung des gleichen Luftspaltes 50 aufnehmen. Besonders bevorzugt ist der Durchmesser der rillenförmigen Ausnehmung 22 in der inneren Spindel 2 identisch zu dem Radius der Aufnahme 32 in der äußeren Spindel 3, so dass die Wälzkörper 5 unter gleichen Bedingungen an der inneren Spindel 2 und der äußeren Spindel 3 aufgenommen werden.

Alternativ ist es denkbar und möglich, die Aufnahme 40 für die elastische Walze 6 in Bezug auf die Ausnehmungen 44 in der Gleithülse 4 für die Wälzkörper 5 derart versetzt anzuordnen, dass die Wälzkörper 5, insbesondere die Kugeln, gegenüber den rillenförmigen Ausnehmungen 22 der inneren Spindel 2 und der Aufnahme 32 der äußeren Spindel 3 in eine Rotationsrichtung vorgespannt angeordnet sind. Dadurch kann erreicht werden, dass die Kugeln bzw. die Wälzkörper 5 beim Anliegen von geringen Drehmomenten nicht klappern. Auf diese Weise kann die Geräuschbildung in der Lenkwelle 1 reduziert werden. Bei der Auslegung ist allerdings darauf zu achten, dass die Vorspannung nicht zu groß ist, damit die Welle schon bei geringen Verschiebekräften axial teleskopiert werden kann.

Über die steifen Wälzkörper 5 wird ein Formschluss zwischen der inneren Spindel 2 und der äußeren Spindel 3 bereitgestellt, welcher eine Drehmomentübertragung zwischen der inneren Spindel 2 und der äußeren Spindel 3 ermöglicht.

Die Ausnehmungen 22 der inneren Spindel 2 sind in dem in Figur 3 gezeigten Ausführungsbeispiel so ausgestaltet, dass sie im Bereich der Aufnahmen 40 der Gleithülse 4 einen größeren Querschnitt aufweisen, als im Bereich der Ausnehmungen 44 der Gleithülse 4. Damit kann erreicht werden, dass die jeweils freien Bereiche, in welchen die steifen Wälzkörper 5 und die elastischen Walzen 6 zwischen der inneren Spindel 2 und der äußeren Spindel 3 angeordnet werden, im wesentlichen den gleichen freien Durchmesser aufweisen. Durch den größeren Querschnitt der Ausnehmungen 22 der inneren Spindel 2 im Bereich der als Vertiefungen in der Gleithülse 4 vorgesehenen Aufnahmen 40 kann entsprechend die Materialstärke der Gleithülse 4 kompensiert werden.

In den Aufnahmen 40 der Gleithülse 4 sind elastische Walzen 6 aufgenommen, welche die von der Aufnahme 32 der äußeren Spindel 3 und der Aufnahme 40 der Gleithülse 4 ausgebildeten Raum nach außen hin im Wesentlichen umspannen oder ausfüllen. Die elastischen Walzen 6 sind dabei bevorzugt so vorgespannt, dass sie im Wesentlichen vollständig an der Aufnahme 40 der Gleithülse 4 und der Aufnahme 32 der äußeren Spindel 3 anliegen, bevorzugt unter einer vorzugebenden Vorspannung.

Die elastischen Walzen 6 sind in der Aufnahme 40 der Gleithülse 4 bezüglich der Gleithülse 4 ortsfest gehalten. Die Gleithülse 4 kann bezüglich der inneren Spindel 2 oder der äußeren Spindel 3 ortsfest gehalten werden. In einer Variante kann die Gleithülse 4 aber auch bezüglich der inneren Spindel 2 und der äußeren Spindel 3 frei verschiebbar angeordnet sein, wobei dann ein Anschlag derart vorgesehen sein muss, dass die Gleithülse 4 nicht aus dem Zwischenraum zwischen der inneren Spindel 2 und der äußeren Spindel 3 herauswandert.

Die elastische Walze 6 ist aus einem Kunststoffmaterial hergestellt, welches zum einen die benötigte Elastizität und Vorspannung, und zum anderen ein optimiertes Reibungsverhalten zwischen der Gleithülse 4 und der äußeren Spindel 3 bereitstellt. Durch die Wahl des jeweiligen Kunststoffmaterials kann die Reibung gering gehalten werden, so dass Stick-Slip-Effekte minimiert werden und ein ruck- und geräuschfreies sowie sanft gleitendes Teleskopieren zwischen äußerer Spindel 3 und innerer Spindel 2 erreicht werden kann.

Die Dimensionierung der elastischen Walze 6 beziehungsweise das Aufbringen der Vorspannung der elastischen Walze 6 ermöglicht es, beim Eintragen eines Drehmomentes über die äußere Spindel 3 dieses Drehmoment, insbesondere ein kleines Drehmoment, direkt über die elastische Walze 6 und die Aufnahme 40 der Gleithülse 4 auf die innere Spindel 3 zu übertragen. Diese Drehmomentübertragung kleiner Drehmomente findet aufgrund der Elastizität und Vorspannung der elastischen Walze 6 spielfrei statt, da eine Kompression der elastischen Walze 6 noch nicht stattfindet. Wird das über die äußere Spindel 3 eingetragene Drehmoment höher, derart, dass die elastische Walze 6 elastisch verformt wird, so findet eine Relativverdrehung zwischen der inneren Spindel 2 und der äußeren Spindel 3 statt, wodurch der Luftspalt 50 zwischen dem steifen Wälzkörper 5 und der rillenförmigen Ausnehmung 22 der inneren Spindel 2 sowie der Aufnahme 32 der äußeren Spindel 3 überwunden wird und die steifen Wälzkörper 5 dann entsprechend spielfrei an den Ausnehmungen 22 und Aufnahmen 32 anliegen. Höhere Drehmomente werden entsprechend über die dann an den jeweiligen Oberflächen der Ausnehmung 22 der inneren Spindel 2 und der Aufnahme 32 der äußeren Spindel 3 direkt anliegenden steifen Wälzkörper 5 zwischen der äußeren Spindel 3 und der inneren Spindel 2 übertragen.

Die Wälzkörper 5 sind dabei bevorzugt aus zumindest in dem Bereich der eingetragenen Drehmomente im Wesentlichen nicht elastisch wirkenden Materialien ausgebildet, beispielsweise in Form von steifen Stahlkugeln.

Durch die elastische Walze 6 können entsprechend kleine Drehmomente übertragen werden und bei einer Erhöhung der zu übertragenden Drehmomente findet die Drehmomentübertragung über die steifen Wälzkörper 5 statt.

Für einen Fahrer ergibt sich hierdurch das Gefühl, dass die Drehmomentübertragung vollkommen spielfrei stattfindet, da bereits beim Eintragen sehr kleiner Drehmomente über die elastischen Walzen 6 eine direkte Übertragung der Drehmomente stattfindet.

Das Teleskopierverhalten ist dahingehend verbessert, dass aufgrund des Luftspalts 50 zwischen den Wälzkörpern 5 und den rillenförmigen Ausnehmungen 22 sowie der Aufnahme 32 bei entlasteter Lenkwelle 1, also ohne das Eintragen eines Drehmomentes, die Wälzkörper 5 im Wesentlichen frei vorliegen, und damit den Stick-Slip-Effekt nicht begünstigen. Reibung findet entsprechend nur im Bereich der elastischen Walzen 6 statt, wobei diese Reibung über die entsprechenden Anpassungen des Materials der elastischen Walze 6 an das Material der inneren Spindel 2 und/oder der äußeren Spindel 3 so optimiert werden können, dass der Stick-Slip-Effekt nicht oder nur reduziert auftritt.

Die Gleithülse 4 und die elastische Walze 6 sind bevorzugt aus unterschiedlichen Materialien hergestellt, so dass die Gleithülse 4 bezüglich der Gleiteigenschaften und der Verschleißeigenschaften sowie der Stabilität und Festigkeit in radialer Richtung zur Erhöhung der Führung optimiert werden kann. Die elastische Walze 6 kann bezüglich ihrer Elastizität, ihrer Vorspannung sowie ebenfalls ihres Reibverhaltens optimiert werden.

Bezüglich der Elastizität sind die Anforderungen an die Gleithülse 4 und die elastische Walze 6 unterschiedlich, da die elastische Walze 6 eine hohe Elastizität fordert, wohingegen die Gleithülse 4 eine hohe Steifheit fordert, um das Teleskopierverhalten der Lenkwelle 1 unabhängig von der Position der inneren Spindel 2 bezüglich der äußeren Spindel 3 konstant zu halten und ein mögliches Verkanten der inneren Spindel 2 gegenüber der äußeren Spindel 3 zu verhindern beziehungsweise zu reduzieren. Hierzu ist die Verwendung eines möglichst wenig kompressiblen Materials für die Gleithülse 4 vorteilhaft. Die elastische Walze 6 hingegen ist vorteilhaft elastisch und kompressibel, um den vorbeschriebenen Effekt der spielfreien Übertragung bereits kleinster Drehmomente durch die Elastizität und eine aufgebrachte Vorspannung zu ermöglichen.

In Figur 4 ist eine weitere Querschnittdarstellung einer Lenkwelle 1 mit einer inneren Spindel 2, einer äußeren Spindel 3 sowie einer dazwischen angeordneten Gleithülse 4 gezeigt, wobei die Gleithülse 4 Ausnehmungen 44 zur Aufnahme der Wälzkörper 5 aufweist, und ebenso eine als Aussparung ausgebildete Aufnahme 40 zur Aufnahme einer elastischen Walze 6 aufweist. In dem in Figur 4 gezeigten Ausführungsbeispiel liegen entsprechend nicht nur die Wälzkörper 5 direkt an dem Material der inneren Spindel 2 und der äußeren Spindel 3 an, sondern auch die elastische Walze 6 liegt direkt an den Materialoberflächen der inneren Spindel 2 und der äußeren Spindel 3 an.

Durch die direkte Anlage der elastischen Walze 6 an den Oberflächen der inneren Spindel 2 und der äußeren Spindel 3 und aufgrund der Elastizität der elastischen Walze 6 kann auch hier eine im Wesentlichen spielfreie Übertragung von Drehmomenten erreicht werden. Besonders bevorzugt ist die elastische Walze 6 unter einer Vorspannung zwischen der inneren Spindel 2 und der äußeren Spindel 3 eingebracht, so dass eine Drehmomentübertragung auch kleinster Drehmomente sofort erreicht werden kann, sobald ein Drehmoment von der äußeren Spindel 3 auf die innere Spindel oder von der inneren Spindel 2 auf die äußere Spindel 3 übertragen werden soll. Bei höheren Drehmomenten, wenn die elastische Walze 6 bereits etwas deformiert ist, greifen die steifen Wälzkörper 5, insbesondere in Form von Stahlkugeln, ein und stellen einen Formschluss zwischen der inneren Spindel 2 und der äußeren Spindel 3 derart bereit, dass auch große Drehmomente übertragen werden können.

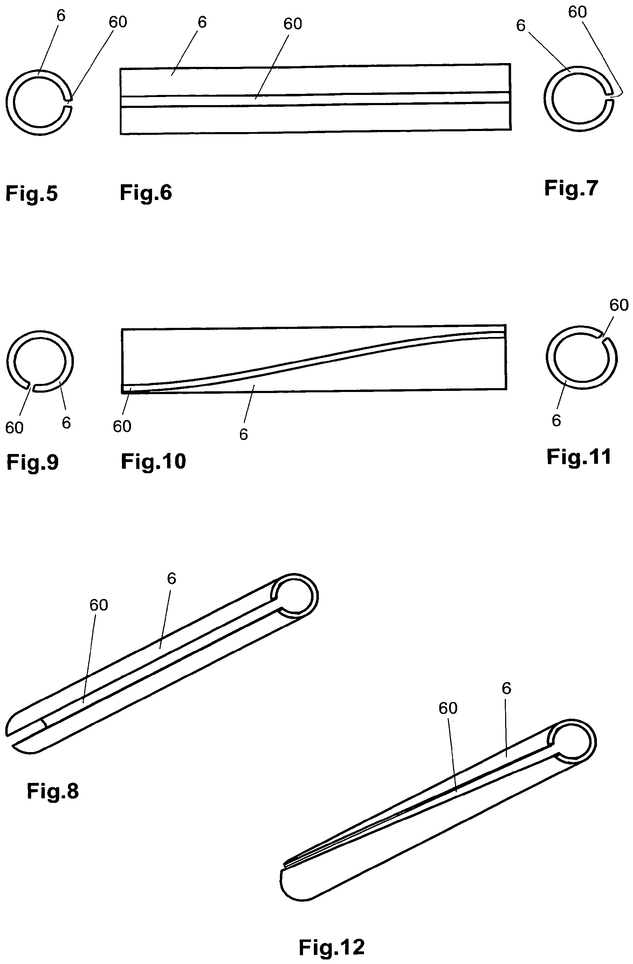

In den Figuren 5-8 ist eine nicht erfindungsgemäße elastische Walze 6 in unterschiedlichen Ansichten gezeigt. Die elastische Walze 6 weist einen durchgehenden Schlitz 60 auf, der sich in dem gezeigten Ausführungsbeispiel entlang der Achse der elastischen Walze 6 erstreckt. Die elastische Walze 6 weist ein C-förmiges Profil auf, so wie es beispielsweise in den Figuren 5, 7 und 8 zu erkennen ist. Die elastische Walze 6 ist aus einem Kunststoffmaterial hergestellt, welches eine im Wesentlichen Stick-Slip-freie Verschiebung der inneren Spindel 2 gegenüber der äußeren Spindel 3 ermöglicht.

In den Figuren 9-12 ist eine erfindungsgemäße elastische Walze 6 in einer zweiten Ausführungsform gezeigt, in welcher der Schlitz 60 sich ebenfalls von einem Ende zum anderen Ende der elastischen Walze 6 erstreckt, hier aber schraubenförmig im Sinne eines Viertelschraubenganges ausgebildet ist. Das Profil der elastischen Walze 6 in diesem Ausführungsbeispiel ist, wie sich beispielsweise aus den Figuren 9, 11 und 12 ergibt, ebenfalls C-förmig.

Der Durchmesser der elastischen Walze 6 im entspannten Zustand ist bevorzugt etwas größer als der Durchmesser, welcher zwischen der Aufnahme 32 der äußeren Spindel 3 und der rillenförmigen Ausnehmung 22 der inneren Spindel 2 ergibt, derart, dass beim Einsetzen der elastischen Walze 6 diese unter einer Vorspannung zwischen der inneren Spindel 2 und der äußeren Spindel 3 angeordnet ist.

Auf diese Weise ist eine drehfeste Verbindung zwischen der inneren Spindel 2 und der äußeren Spindel 3 gegeben, welche es ermöglicht, bereits geringe Drehmomente ohne Spiel zu übertragen. Insbesondere ist das Gefühl, welches ein Fahrer bei der Übertragung eines Steuerbefehls beziehungsweise eines Steuermoments hat, dergestalt, dass kein Spiel zwischen der inneren Spindel 2 und der äußeren Spindel 3 vorliegt. Beim Übertragen höherer Drehmomente wird die elastische Walze 6 so weit komprimiert, bis die nicht-elastischen Wälzkörper 5 die Übertragung des Drehmoments übernehmen.

Entsprechend den Ausführungsbeispielen ist die Gleithülse 4 an der inneren Spindel 2 axial festgelegt. Die Erfindung ist in gleicher Weise anwendbar, wenn die Gleithülse 4 im Innern der äußeren Spindel 3 festgelegt ist. In diesem Fall ist zwischen der Gleithülse 4 und der äußeren Oberfläche der inneren Spindel 2 bevorzugt ein Spalt angeordnet, so dass im Falle einer teleskopischen Verschiebung der inneren Spindel 2, gegenüber der äußeren Spindel 3 die Reibkräfte minimiert sind.

### Bezugszeichenliste

- 1: Lenkwelle
- 2: innere Spindel
- 20: Anschlussstück
- 22: rillenförmige Ausnehmung
- 23: Fixierelement
- 3: äußere Spindel
- 30: Anschlussstück
- 32: Aufnahme
- 4: Gleithülse
- 40: Aufnahme
- 42: Brückenbereich
- 44: Ausnehmung
- 45: Spalt
- 5: Wälzkörper
- 50: Luftspalt
- 6: elastische Walze
- 60: Schlitz

## Patentansprüche

1. Lenkwelle (1) für ein Kraftfahrzeug, umfassend eine innere Spindel (2), eine relativ zu dieser teleskopierbare äußere Spindel (3) und eine zwischen der inneren Spindel (2) und der äußeren Spindel (3) angeordnete Gleithülse (4), wobei die Gleithülse (4) mindestens eine Ausnehmung (44) zum Aufnehmen mindestens eines mit der inneren Spindel (2) und der äußeren Spindel (3) eingreifenden Wälzkörpers (5) zur Drehmomentübertragung aufweist, wobei die Gleithülse (4) mindestens eine Aufnahme (40) zum Aufnehmen mindestens einer zwischen der inneren Spindel (2) und der äußeren Spindel (3) angeordneten elastischen Walze (6) zur Drehmomentübertragung aufweist,
**dadurch gekennzeichnet,**
**dass** in der Aufnahme (40) mindestens eine elastische Walze (6) aus einem elastischen Kunststoff aufgenommen ist, wobei die elastische Walze (6) einen sich in Walzenrichtung erstreckenden Schlitz (60) aufweist, der schraubenförmig im Sinne eines Viertelschraubenganges ausgestaltet ist, und die elastische Walze (6) einen C-förmigen Querschnitt aufweist.

2. Lenkwelle (1) gemäß Anspruch 1, **dadurch gekennzeichnet, dass** die Aufnahme (40) als Aussparung ausgebildet ist, welche die elastische Walze (6) so aufnimmt, dass sie mit der inneren Spindel (2) und der äußeren Spindel (3) direkt in Kontakt steht.

3. Lenkwelle (1) gemäß Anspruch 1, **dadurch gekennzeichnet, dass** die Aufnahme (40) als Vertiefung in der Gleithülse (4) ausgebildet ist, welche die elastische Walze (6) so aufnimmt, dass sie zwischen der Gleithülse (4) und der inneren Spindel (2) oder zwischen der Gleithülse (4) der äußeren Spindel (3) angeordnet ist.

4. Lenkwelle (1) gemäß einem der vorstehenden Ansprüche, **dadurch gekennzeichnet, dass** in der Ausnehmung (44) der Gleithülse mindestens ein Wälzkörper (5), bevorzugt mindestens eine Stahlkugel, angeordnet ist, der mit der inneren Spindel (2) und der äußeren Spindel (3) zur Drehmomentübertragung in Kontakt steht, wobei der Wälzkörper (5) bevorzugt steifer ist, als die elastische Welle (6).

5. Lenkwelle (1) gemäß Anspruch 4, **dadurch gekennzeichnet, dass** der steife Wälzkörper (5) unter Spiel, bevorzugt unter Ausbildung eines Luftspalts (50), zwischen der inneren Spindel (2) und der äußeren Spindel (3) angeordnet ist.

6. Lenkwelle (1) gemäß einem der vorstehenden Ansprüche, **dadurch gekennzeichnet, dass** in der Aufnahme (40) mindestens eine elastische Walze (6) aus einem elastischen Kunststoff, aufgenommen ist, welche im entspannten Zustand einen größeren Durchmesser aufweist, als ein Wälzkörper (5), und die elastische Walze (6) besonders bevorzugt unter Vorspannung zwischen der inneren Spindel (2) und der äußeren Spindel (3) angeordnet ist.

7. Lenkwelle (1) gemäß einem der vorstehenden Ansprüche, **dadurch gekennzeichnet, dass** die Gleithülse (4) aus einem Material ausgebildet ist, das steifer ist, als das Material der elastischen Walze (6) und bevorzugt aus einem steifen Kunststoffmaterial ausgebildet ist.

8. Lenkwelle (1) gemäß einem der vorstehenden Ansprüche, **dadurch gekennzeichnet, dass** entlang des Umfangs der Gleithülse (4) mindestens zwei Aufnahmen (40) zum Aufnehmen elastischer Walzen (6) und mindestens zwei Ausnehmungen (44) zum Aufnehmen steifer Wälzkörper (5) vorgesehen sind, wobei Ausnehmungen (44) und Aufnahmen (40) in Umfangsrichtung abwechselnd vorgesehen sind.

9. Gleithülse (4) zur Anordnung zwischen einer inneren Spindel (2) und einer relativ zu dieser teleskopierbaren äußeren Spindel (3) einer Lenkwelle (1) eines Kraftfahrzeugs, wobei die Gleithülse (4) mindestens eine Ausnehmung (44) zum Aufnehmen mindestens eines mit der inneren Spindel (2) und der äußeren Spindel (3) eingreifenden Wälzkörpers (5) zur Drehmomentübertragung aufweist, wobei die Gleithülse (4) mindestens eine Aufnahme (40) zum Aufnehmen mindestens einer zwischen der inneren Spindel (2) und der äußeren Spindel (3) angeordneten elastischen Walze (6) zur Drehmomentübertragung aufweist,
**dadurch gekennzeichnet,**
**dass** in der Aufnahme (40) mindestens eine elastische Walze (6) aus einem elastischen Kunststoff aufgenommen ist, wobei die elastische Walze (6) einen sich in Walzenrichtung erstreckenden Schlitz (60) aufweist, der schraubenförmig im Sinne eines Viertelschraubenganges ausgestaltet ist, und die elastische Walze (6) einen C-förmigen Querschnitt aufweist.

## Claims

1. Steering shaft (1) for a motor vehicle, comprising an inner spindle (2), an outer spindle (3) which is telescopable relative to said inner spindle, and a sliding sleeve (4) which is arranged between the inner spindle (2) and the outer spindle (3), wherein the sliding sleeve (4) comprises at least one recess (44) for receiving at least one rolling body (5), which engages with the inner spindle (2) and the outer spindle (3), for the purposes of transmitting torque, wherein the sliding sleeve (4) comprises at least one receptacle (40) for receiving at least one elastic roller (6), which is arranged between the inner spindle (2) and the outer spindle (3), for the purposes of transmitting torque,
**characterized**
**in that** at least one elastic roller (6) composed of an elastic plastic is received in the receptacle (40), wherein the elastic roller (6) comprises a slot (60) which extends in the roller direction and which is of helical form in the manner of a quarter screw turn, and the elastic roller (6) comprises a C-shaped cross section.

2. Steering shaft (1) according to Claim 1, **characterized in that** the receptacle (40) is formed as a cutout which receives the elastic roller (6) such that the latter is in direct contact with the inner spindle (2) and with the outer spindle (3).

3. Steering shaft (1) according to Claim 1, **characterized in that** the receptacle (40) is formed as a depression in the sliding sleeve (4), which depression receives the elastic roller (6) such that the latter is arranged between the sliding sleeve (4) and the inner spindle (2) or between the sliding sleeve (4) of the outer spindle (3).

4. Steering shaft (1) according to one of the preceding claims, **characterized in that** at least one rolling body (5), preferably at least one steel ball, is arranged in the recess (44), which rolling body is in contact with the inner spindle (2) and with the outer spindle (3) for the purposes of transmitting torque, wherein the rolling body (5) is preferably stiffer than the elastic shaft (6).

5. Steering shaft (1) according to Claim 4, **characterized in that** the stiff rolling body (5) is arranged with play, preferably with the formation of an air gap (50), between the inner spindle (2) and the outer spindle (3).

6. Steering shaft (1) according to one of the preceding claims, **characterized in that**, in the receptacle (40), there is received at least one elastic roller (6) composed of an elastic plastic which, in the relaxed state, comprises a greater diameter than a rolling body (5), and the elastic roller (6) is particularly preferably arranged under preload between the inner spindle (2) and the outer spindle (3).

7. Steering shaft (1) according to one of the preceding claims, **characterized in that** the sliding sleeve (4) is formed from a material which is stiffer than the material of the elastic roller (6), and is preferably formed from a stiff plastics material.

8. Steering shaft (1) according to one of the preceding claims, **characterized in that**, along the circumference of the sliding sleeve (4), there are provided at least two receptacles (40) for receiving elastic rollers (6) and at least two receptacles (44) for receiving stiff rolling bodies (5), wherein recesses (44) and receptacles (40) are provided in alternation in the circumferential direction.

9. A sliding sleeve (4) for arrangement between an inner spindle (2) and an outer spindle (3), which is telescopable relative to said inner spindle, of a steering shaft (1) of a motor vehicle, wherein the sliding sleeve (4) comprises at least one recess (44) for receiving at least one rolling body (5), which engages with the inner spindle (2) and the outer spindle (3), for the purposes of transmitting torque, wherein the sliding sleeve (4) comprises at least one receptacle (40) for receiving at least one elastic roller (6), which is arranged between the inner spindle (2) and the outer spindle (3), for the purposes of transmitting torque,
**characterized**
**in that** at least one elastic roller (6) composed of an elastic plastic is received in the receptacle (40), wherein the elastic roller (6) comprises a slot (60) which extends in the roller direction and which is of helical form in the manner of a quarter screw turn, and the elastic roller (6) comprises a C-shaped cross section.

## Revendications

1. Arbre de direction (1) pour un véhicule automobile, comprenant une broche interne (2), une broche externe (3) télescopable par rapport à celle-ci et un manchon coulissant (4) disposé entre la broche interne (2) et la broche externe (3), le manchon coulissant (4) présentant au moins un évidement (44) pour recevoir au moins un corps de roulement (5) venant en prise avec la broche interne (2) et avec la broche externe (3) en vue du transfert de couple, le manchon coulissant (4) présentant au moins un logement (40) pour recevoir au moins un rouleau élastique (6) disposé entre la broche interne (2) et la broche externe (3) en vue du transfert de couple,
**caractérisé en ce qu'**au moins un rouleau élastique (6) constitué d'un plastique élastique est reçu dans le logement (40), le rouleau élastique (6) présentant une fente (60) s'étendant dans la direction du rouleau, qui est configurée sous forme hélicoïdale au sens d'un quart de pas de vis, et le rouleau élastique (6) présentant une section transversale en forme de C.

2. Arbre de direction (1) selon la revendication 1, **caractérisé en ce que** le logement (40) est réalisé sous forme d'évidement qui reçoit le rouleau élastique (6) de telle sorte qu'il vienne en contact direct avec la broche interne (2) et avec la broche externe (3).

3. Arbre de direction (1) selon la revendication 1, **caractérisé en ce que** le logement (40) est réalisé sous forme de renfoncement dans le manchon coulissant (4), qui reçoit le rouleau élastique (6) de telle sorte qu'il soit disposé entre le manchon coulissant (4) et la broche interne (2) ou entre le manchon coulissant (4) de la broche externe (3).

4. Arbre de direction (1) selon l'une quelconque des revendications précédentes, **caractérisé en ce que** dans l'évidement (44) du manchon coulissant est disposé au moins un corps de roulement (5), de préférence au moins une bille en acier, qui est en contact avec la broche interne (2) et avec la broche externe (3) en vue du transfert de couple, le corps de roulement (5) étant de préférence plus rigide que l'arbre élastique (6).

5. Arbre de direction (1) selon la revendication 4, **caractérisé en ce que** le corps de roulement rigide (5) est disposé avec jeu, de préférence en formant un entrefer (50), entre la broche interne (2) et la broche externe (3).

6. Arbre de direction (1) selon l'une quelconque des revendications précédentes, **caractérisé en ce qu'**au moins un rouleau élastique (6) en plastique élastique est reçu dans le logement (40), lequel, dans l'état détendu, présente un plus grand diamètre qu'un corps de roulement (5), et le rouleau élastique (6), particulièrement préférablement, est disposé avec précontrainte entre la broche interne (2) et la broche externe (3).

7. Arbre de direction (1) selon l'une quelconque des revendications précédentes, **caractérisé en ce que** le manchon coulissant (4) est réalisé en un matériau qui est plus rigide que le matériau du rouleau élastique (6) et qui est réalisé de préférence en un matériau en plastique rigide.

8. Arbre de direction (1) selon l'une quelconque des revendications précédentes, **caractérisé en ce que** le long de la périphérie du manchon coulissant (4) sont prévus au moins deux logements (40) pour recevoir des rouleaux élastiques (6) et au moins deux évidements (44) pour recevoir des corps de roulement rigides (5), des évidements (44) et des logements (40) étant prévus en alternance dans la direction périphérique.

9. Manchon coulissant (4) destiné à être disposé entre une broche interne (2) et une broche externe (3), télescopable par rapport à celle-ci, d'un arbre de direction (1) d'un véhicule automobile, le manchon coulissant (4) présentant au moins un évidement (44) pour recevoir au moins un corps de roulement (5) s'engageant avec la broche interne (2) et la broche externe (3) en vue du transfert de couple, le manchon coulissant (4) présentant au moins un logement (40) pour recevoir au moins un rouleau élastique (6) disposé entre la broche interne (2) et la broche externe (3) en vue du transfert de couple,
**caractérisé en ce que**
dans le logement (40) est reçu au moins un rouleau élastique (6) constitué d'un plastique élastique, le rouleau élastique (6) présentant une fente (60) s'étendant dans la direction du rouleau, qui est configurée sous forme hélicoïdale au sens d'un quart de pas de vis, et le rouleau élastique (6) présentant une section transversale en forme de C.
